# EUROPÄISCHE PATENTSCHRIFT

(11) **EP 3 482 482 B1**
(45) Veröffentlichungstag und Bekanntmachung des Hinweises auf die Patenterteilung: **19.05.2021**
(21) Anmeldenummer: 17728840.4
(22) Anmeldetag: 09.06.2017
(51) Int. Cl.: H02K 7/116, F16H 57/021, F16H 57/031, F16H 57/02

(54) **ELEKTROMOTORANORDNUNG UND VERFAHREN ZUR MONTAGE EINER ELEKTROMOTORANORDNUNG**
ELECTRIC MOTOR ASSEMBLY AND METHOD FOR ASSEMBLING AN ELECTRIC MOTOR ASSEMBLY
ENSEMBLE MOTEUR ÉLECTRIQUE ET PROCÉDÉ DE MONTAGE D'UN ENSEMBLE MOTEUR ÉLECTRIQUE

(30) Priorität: 06.07.2016 DE 102016112426
(43) Veröffentlichungstag der Anmeldung: 15.05.2019
(73) Patentinhaber: Magna PT B.V. & Co. KG, 74199 Untergruppenbach (DE)
(72) Erfinder: IHBEN, Harald, 71640 Ludwigsburg (DE); BAYARI, Nadine, 71720 Oberstenfeld (DE)
(74) Vertreter: Rausch, Gabriele
(86) Internationale Anmeldenummer: PCT/EP2017/064061
(87) Internationale Veröffentlichungsnummer: WO 2018/007094

(56) Entgegenhaltungen:
- EP-A1- 0 375 129
- EP-A1- 0 601 433
- EP-A1- 1 806 499

## Beschreibung

Die vorliegende Erfindung betrifft eine Elektromotoranordnung, welche zwei Gehäuseteile umfasst, wobei das erste Gehäuseteil mit dem zweiten Gehäuseteil verbindbar ist, wobei in dem ersten Gehäuseteil ein Elektromotor angeordnet ist, wobei eine Rotorwelle des Elektromotors ein Ritzel aufweist, welches in Zahneingriff mit einem Losrad steht, um eine Stirnradstufe auszubilden. Ferner betrifft die vorliegende Erfindung ein Verfahren zur Montage einer Elektromotoranordnung.

Es ist allgemeint bekannt, dass Elektromotoren mittels einem Zentrierbund oder mittels Passstifte, -hülsen, oder-bolzen an ein Gehäuse zentrierbar sind.

Nachteilig hierbei ist, dass die Zentrierung nicht direkt am Zahnrad erfolgt. Dies hat einen Einfluss auf die Schiefstellung von Achsen, auf denen Zahnräder angeordnet und mit dem Elektromotor wirkverbunden sind. Diese Schiefstellung beeinflusst das Tragbild der Verzahnung, was Auswirkungen auf die Festigkeit, den Verschleiß und das Geräuschverhalten der Verzahnung hat.

Aus der EP 0 375 129 A1 ist ein Anlasser zur Verwendung mit einem Verbrennungsmotor bekannt, der ein Zwischenrad beinhaltet, das ständig mit einem verschiebbaren Ritzelrad in Eingriff steht, um einen Anlauf und eine Drehung für ein angetriebenes Zahnrad am Motor bereitzustellen. Das Ritzel ist auf der Rotorachse des Anlassers verschieblich angeordnet und wird von einer Kupplung in Richtung auf ein Losrad verschoben, wobei das Losrad auf einer Halterung in einem Deckel des Gehäuses angeordnet ist.

Aus der EP 1 806 499 A1 ist ein Startermotor bekannt, wobei von einem Motor über ein Planetengetriebe gedrehten Antriebswelle ein schrägverzahnter Abschnitt gebildet wird, und am schrägverzahnten Abschnitt ist eine axial bewegliche Kupplung montiert. Ein Ritzel, das in ein Leerlaufgetriebe eingreift, ist integral mit einem Kupplungsinnenraum der Überholkupplung ausgebildet. Am distalen Ende des Ritzels ist ein Transportflansch ausgebildet, der in das Leerlaufrad eingreift und das Leerlaufrad zusammen mit der Axialbewegung des Ritzels von einem Hohlrad trennt.

Der Erfindung liegt daher die Aufgabe zugrunde, Elektromotoranordnungen weiterzubilden, wobei eine Schiefstellung von mit dem Elektromotor in Eingriff stehenden Zahnrädern vermieden wird.

Erfindungsgemäß wird die Aufgabe mit einer Elektromotoranordnung nach den in Anspruch 1 genannten Merkmalen gelöst. Zudem wird die Aufgabe durch ein Verfahren zur Montage einer Elektromotoranordnung nach den in Anspruch 8 oder 9 genannten Merkmalen gelöst. Bevorzugte Ausführungsbeispiele können den Unteransprüchen entnommen werden.

Ausgehend von den Merkmalen des Oberbegriffs des Anspruchs 1 sieht die Erfindung eine Zentriervorrichtung vor, die das erste Gehäuseteil gegen das zweite Gehäuseteil zentriert, wobei das Losrad an der Zentriervorrichtung drehbar gelagert ist.

Damit ist eine Reduzierung der Schiefstellung jener Achse erreicht, um die ein Zahnrad dreht, das wiederum mit dem Elektromotor bzw. mit dem Ritzel des Elektromotors in Wirkverbindung steht.

In der erfindungsgemäßen Ausgestaltung ist die Zentriervorrichtung zylindrisch ausgestaltet, wobei die Zentriervorrichtung eine Längsachse bildet, die parallel zur Rotorwelle ausgerichtet ist. Somit wird eine einfache und kostengünstige Konstruktion der erfindungsgemäßen Elektromotoranordnung ermöglicht.

Die Rotorwelle ist mittels eines ersten Lagers im ersten Gehäuseteil und mittels eines zweiten Lagers im zweiten Gehäuseteil drehbar gelagert. Aufgrund der Lagerfestlegungen an unterschiedlichen Gehäuseteilen kann eine axial kompakte Bauweise realisiert werden, was zudem auch die Steifigkeit beider verbundenen Gehäuseteile erhöht.

Ferner ist es vorteilhaft, wenn die Zentriervorrichtung als Bolzen, Stift oder Hülse ausgebildet ist. Hierdurch wird eine einfache und kostengünstige Elektromotoranordnung ermöglicht.

Der Bolzen, der Stift oder die Hülse sind aus Stahl oder Aluminium gefertigt.

Eine Ausgestaltung sieht vor, dass sich die Zentriervorrichtung in jeweils eine Ausnehmung des ersten und zweiten Gehäuseteils axial erstreckt, was eine einfache Montage der erfindungsgemäßen Elektromotoranordnung ermöglicht.

Zudem ist es von Vorteil, wenn die Zentriervorrichtung mittels einer Spielpassung an das erste oder zweite Gehäuseteil angebunden ist, sodass eine schnelle und einfache Montage gewährleistet wird. Die Spielpassung zwischen der Zentriervorrichtung und einer Ausnehmung des ersten oder zweiten Gehäuseteils beträgt maximal 50 µm, in einem Ausführungsbeispiel jedoch 10 bis 35 µm.

In einer weiteren Ausgestaltung ist die Zentriervorrichtung mittels einer Presspassung an das erste und/oder zweite Gehäuseteil angebunden, um die Toleranzkette an Spiel zwischen beiden Gehäuseteilen so gering wie möglich zu halten.

In einer besonders bevorzugten Ausgestaltung sind das Ritzel und das zweite Lager axial benachbart angeordnet, um eine axial kompakte Bauweise realisieren zu können.

Zudem ist es von Vorteil, wenn das erste Gehäuseteil einen Gehäusedeckel aufweist, um den Elektromotor in das erste Gehäuse einführen zu können. Somit ist das erste Gehäuseteil zweigeteilt. Es ist jedoch auch denkbar, dass das Gehäuse aus mehr als zwei Bauteilen besteht, um eine einfache Montage von weiteren Bauelementen in das erste Gehäuseteil ermöglichen zu können.

Eine weitere vorteilhafte Ausgestaltung sieht vor, dass die erfindungsgemäße Elektromotoranordnung an ein Kraftfahrzeuggetriebe angebunden ist, wobei das zweite Gehäuseteil einem Getriebegehäuse oder einem Kupplungsgehäuse des Kraftfahrzeuggetriebes zugeordnet ist, wobei das Kraftfahrzeuggetriebe zumindest ein außenverzahntes Bauteil aufweist und wobei das Losrad mit dem außenverzahnten Bauteil in Zahneingriff steht. Diese Elektromotoranordnung ermöglicht eine einfache "Hybridisierung" des Kraftfahrzeuggetriebes, ohne das mit dem Losrad in Zahneingriff stehende außenverzahnte Bauteil großartig zu verschleißen oder ungewolltes Geräuschverhalten aufgrund einer Schiefstellung der Achsen hervorzurufen. Das außenverzahnte Bauteil ist ein Zahnrad, ein Zahnkranz eines Differentials, ein Planetenradsatz oder ein außenverzahnter Kupplungskorb.

Das Kraftfahrzeuggetriebe ist als ein manuelles Getriebe, ein automatisiertes manuelles Getriebe (AMT), ein Doppelkupplungsgetriebe, ein Wandler-Automatikgetriebe oder stufenloses Getriebe ausgeführt.

Vorteilhaft ist es, wenn ein Verfahren zur Montage einer Elektromotoranordnung nachfolgenden Schritten durchgeführt wird:
- Einführen des Elektromotors, der Rotorwelle, des Ritzels und des ersten Lagers in das erste Gehäuseteil, wobei das zweite Lager auf die Rotorwelle aufgeschoben oder in eine zusätzliche Ausnehmung des zweiten Gehäuseteils angeordnet wird;
- Anordnen des Losrads an das Ritzel, sodass das Losrad in Zahneingriff mit dem Ritzel steht;
- Ausrichten des Losrads, derart, dass das Losrad koaxial zur Ausnehmung des ersten Getriebeteils ausgerichtet ist;
- Anbringen der Zentriervorrichtung an das erste Gehäuseteil, wobei die Zentriervorrichtung durch das Losrad hindurch und axial in Richtung der Ausnehmung des ersten Gehäuseteils geschoben oder gepresst wird, wobei hierbei das erste Gehäuseteil, die Zentriervorrichtung, der Elektromotor, die Rotorwelle, das Ritzel, das erste Lager und das Losrad eine Baugruppe bilden;
- Zentrieren der Baugruppe, indem die Zentriervorrichtung in die Ausnehmung des zweiten Gehäuseteils geschoben oder gepresst wird;
- Verbinden des ersten Gehäuseteils mit dem zweiten Gehäuseteil.

Durch dieses Verfahren wird eine einfache und schnelle Montage der erfindungsgemäßen Elektromotoranordnung gewährleistet.

Ein weiteres bevorzugtes Verfahren zur Montage einer Elektromotoranordnung sieht folgende Schritte vor:
- Einführen des Elektromotors (4), der Rotorwelle (5), des Ritzels (6) und des ersten Lagers (13) in das erste Gehäuseteil (2), wobei das zweite Lager (14) auf die Rotorwelle (5) aufgeschoben oder in eine zusätzliche Ausnehmung des zweiten Gehäuseteils angeordnet wird;
- Anordnen des Losrads (7) an das Ritzel (6), sodass das Losrad (7) in Zahneingriff mit dem Ritzel (6) steht;
- Ausrichten des Losrads (7), derart, dass das Losrad (7) koaxial zur Ausnehmung (11) des ersten Getriebeteils ausgerichtet ist, wobei hierbei das erste Gehäuseteil (2), der Elektromotor (4), die Rotorwelle (5), das Ritzel (6), das erste Lager (13) und das Losrad (7) eine Baugruppe bilden;
- Anbringen der Zentriervorrichtung (8) an das zweite Gehäuseteil (3), wobei die Zentriervorrichtung (8) axial in Richtung der Ausnehmung (12) des zweiten Gehäuseteils (3) geschoben oder gepresst wird;
- Zentrieren der Baugruppe, indem das Losrad (7) auf die Zentriervorrichtung (8) geschoben und in Richtung der Ausnehmung (12) des zweiten Gehäuseteils geschoben wird, wobei hierdurch die Ausnehmung (11) des ersten Gehäuseteils auf die Zentriervorrichtung (8) geschoben oder gepresst wird;
- Verbinden des ersten Gehäuseteils (2) mit dem zweiten Gehäuseteil (3). Durch dieses alternative Verfahren wird ebenso eine einfache und schnelle Montage der erfindungsgemäßen Elektromotoranordnung gewährleistet.

Ausführungsformen der Erfindung sind in den Figuren beispielhaft dargestellt und werden in der Beschreibung der Figuren näher erläutert. Es zeigen:
- Fig. 1: ein Schnittbild eines ersten Ausführungsbeispiels einer erfindungsgemäßen Elektromotoranordnung und
- Fig. 2: ein Schnittbild eines zweiten nicht erfindungsgemäßen Ausführungsbeispiels einer Elektromotoranordnung.

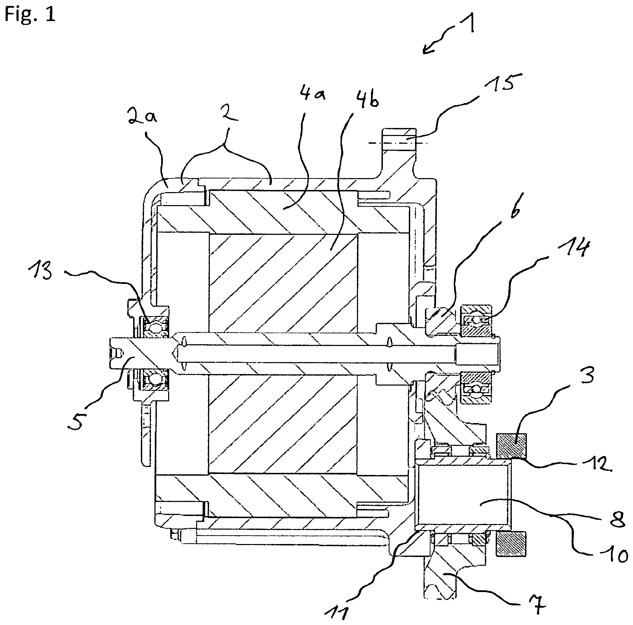

In Figur 1 ist ein erstes Ausführungsbeispiel einer erfindungsgemäßen Elektromotoranordnung 1 gezeigt, welche ein erstes Gehäuseteil 2 und ein zweites Gehäuseteil 3 aufweist, die mittels einer Zentriervorrichtung 8 zentriert sind.

In dem ersten Gehäuseteil 2 sind ein Stator 4a und ein Rotor 4b eines Elektromotors 4 angeordnet, wobei das erste Gehäuseteil 2 für die Montage des Elektromotors 4 einen Gehäusedeckel 2a aufweist und somit zweigeteilt ausgeführt ist. Der Stator 4a liegt an dem ersten Gehäuseteil 2 an.

Eine Rotorwelle 5 ist mit dem Rotor 4b drehfest verbunden und weist ein Ritzel 6 auf, das wiederum mit einem Losrad 7 in Zahneingriff steht, um eine Stirnradstufe auszubilden.

Ein zweites Gehäuseteil 3 ist einem Getriebegehäuse zugeordnet. Das Getriebegehäuse beinhaltet ein Getriebe, ein manuelles Schaltgetriebe, ein automatisiertes Schaltgetriebe, ein Doppelkupplungsgetriebe, ein stufenloses Getriebe, oder ein Planetenradgetriebe, usw.. Der Elektromotor 4 ist mittels der Rotorwelle 5, dem an der Rotorwelle festgelegten Ritzel 6 und dem Losrad 7 mit dem Getriebe des zweiten Gehäuseteils 3 wirkverbunden, wobei das Losrad 7 in Zahneingriff mit dem Getriebe steht, nämlich in Zahneingriff mit einem nicht gezeigten, außenverzahnten Bauteil. Das außenverzahnte Bauteil ist ein Zahnrad, ein Zahnradkranz eines Differentials, ein Planetenradsatz oder ein außenverzahnter Kupplungskorb.

Das erste Gehäuseteil 2 umfasst eine Lagerstelle, in die ein erstes Lager 13 angeordnet ist, wobei das erste Lager 13 ein axiales Ende der Rotorwelle 5 radial lagert. Das erste Lager ist als Wälzlager, insbesondere als Rillenkugellager ausgestaltet. Bei stark auftretenden Axialkräften - aufgrund der Schrägverzahnung von Losrad 7 und Ritzel 6 - ist es jedoch auch denkbar, ein Kegelrollenlager zu verwenden.

Das zweite Gehäuseteil 3 umfasst eine Lagerstelle, in die ein zweites Lager 14 angeordnet ist, wobei das zweite Lager 14 das andere axiale Ende der Rotorwelle 5 radial lagert. Zugleich ist das zweite Lager 14 axial zum Ritzel 6 benachbart angeordnet. Das zweite Lager ist als Wälzlager, insbesondere als Rillenkugellager oder Kegelrollenlager ausgestaltet.

Die Zentriervorrichtung 8 ist in der Form einer Hülse 10 ausgeführt, parallel zur Rotorwelle 5 angeordnet und erstreckt sich axial mittels einer Presspassung in eine Ausnehmung des ersten Gehäuseteils 11 und mittels einer Spielpassung in eine Ausnehmung des zweiten Gehäuseteils 12. Zugleich ist das Losrad 7 auf der Hülse 10 drehbar gelagert.

Die Hülse 10 ist aus Stahl oder Aluminium gefertigt.

Das erste Gehäuseteil 2 ist mittels eines Verbindungselements, wie z. B. einer Schraubenverbindung mit dem zweiten Gehäuseteil verbindbar. Hierzu weist das erste Gehäuseteil wenigstens zwei Bohrungen 15 in Umfangsrichtung des ersten Gehäuseteils und parallel zur Rotorwelle 5 auf, durch die jeweils eine Schraube geführt werden kann. Die Bohrungen weisen im Verhältnis zu den den Bohrungen zugeordneten Schrauben einen größeren Durchmesser auf. Somit wird gewährleistet, dass die Zentrierung lediglich durch die Zentriervorrichtung bewirkt wird. Ist eine Zentrierung erfolgt, kann eine reibschlüssige Verbindung zwischen dem ersten und dem zweiten Gehäuseteil durch ein Festziehen der Schrauben erfolgen. Zudem ist es denkbar, dass die Bohrungen 15 als Langlöcher ausgeführt sind, die sich in Umfangsrichtung erstrecken.

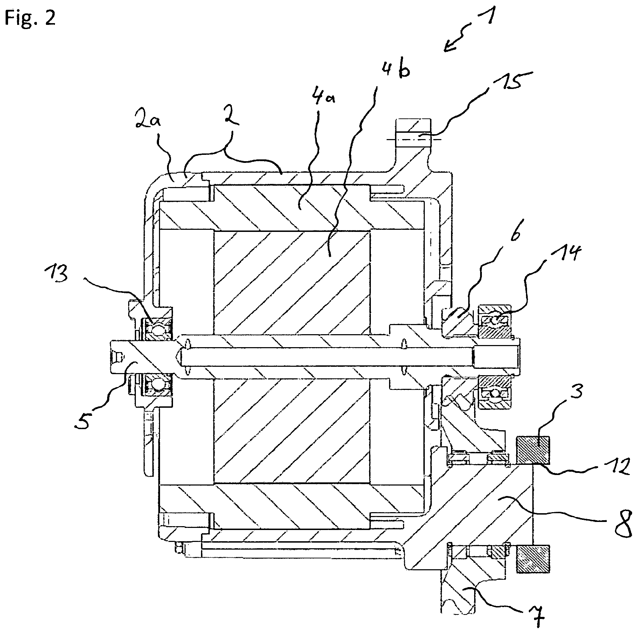

Das in Fig. 2 gezeigte zweite nicht erfindungsgemäße Ausführungsbeispiel entspricht größtenteils dem ersten Ausführungsbeispiel. Somit ergeben sich gleiche Bezugszeichen wie in Fig.1.

Im Gegensatz zu Fig. 1 ist die Zentriervorrichtung 8 in Fig. 2 durch das erste Gehäuseteil 2 gebildet, wobei die Zentriervorrichtung 8 zylindrisch ausgestaltet ist und eine Längsachse bildet, die parallel zur Rotorwelle 5 ausgerichtet ist. Mithilfe des abnehmbaren Gehäusedeckels 2a ist der Elektromotor in das erste Gehäuseteil einführbar.

Die Zentriervorrichtung erstreckt sich axial mittels einer Spielpassung in die Ausnehmung des zweiten Gehäuseteils 12, wobei das Losrad 7 auf der Zentriervorrichtung 8 drehbar gelagert ist.

Zur axialen Sicherung des Losrads 7 weist die Zentriervorrichtung zudem zwei Rillen (16a, 16b) auf, in die ein Sprengring greift, wobei ein Sprengring jeweils an einem axialen Ende des Losrads 7 anliegt.

### Bezugszeichenliste

- 1: Elektromotoranordnung
- 2: Erstes Gehäuseteil
- 2a: Gehäusedeckel des ersten Gehäuseteils
- 3: Zweites Gehäuseteil
- 4: Elektromotor
- 4a: Stator
- 4b: Rotor
- 5: Rotorwelle
- 6: Ritzel
- 7: Losrad
- 8: Zentriervorrichtung
- 9: Bolzen
- 10: Hülse
- 11: Ausnehmung des ersten Gehäuseteils
- 12: Ausnehmung des zweiten Gehäuseteils
- 13: Erstes Lager
- 14: Zweites Lager
- 15: Bohrungen
- 16a: Rille
- 16b: Rille

## Patentansprüche

1. Elektromotoranordnung (1) umfassend zwei Gehäuseteile, wobei das erste Gehäuseteil (2) mit dem zweiten Gehäuseteil (3) verbindbar ist, wobei in dem ersten Gehäuseteil (2) ein Elektromotor (4) angeordnet ist, wobei eine Rotorwelle (5) des Elektromotors (4) ein Ritzel (6) aufweist, welches in Zahneingriff mit einem Losrad (7) steht, um eine Stirnradstufe auszubilden, **dadurch gekennzeichnet, dass** eine Zentriervorrichtung (8) das erste Gehäuseteil (2) gegen das zweite Gehäuseteil (3) zentriert, wobei das Losrad (7) an der Zentriervorrichtung (8) drehbar gelagert ist und die Zentriervorrichtung (8) zylindrisch ausgestaltet ist und eine Längsachse bildet, wobei die Längsachse der Zentriervorrichtung (8) parallel zur Rotorwelle (5) ausgerichtet ist und sich die Zentriervorrichtung (8) in jeweils eine Ausnehmung (11,12) des ersten und zweiten Gehäuseteils axial erstreckt und die Rotorwelle (5) mittels eines ersten Lagers (13) im ersten Gehäuseteil (2) und mittels eines zweiten Lagers (14) im ersten Gehäuseteil (2) oder im zweiten Gehäuseteil (3) drehbar gelagert ist.

2. Elektromotoranordnung nach Anspruch 1, **dadurch gekennzeichnet, dass** die Zentriervorrichtung (8) als Bolzen (9), Stift oder Hülse (10) ausgebildet ist.

3. Elektromotoranordnung nach einem der Ansprüche 1 oder 2, **dadurch gekennzeichnet, dass** die Zentriervorrichtung (8) mittels einer Spielpassung an das erste oder zweite Gehäuseteil (2,3) angebunden ist.

4. Elektromotoranordnung nach einem der Ansprüche 1 oder 2, **dadurch gekennzeichnet, dass** die Zentriervorrichtung (8) mittels einer Presspassung an das erste und/oder zweite Gehäuseteil (2,3) angebunden ist.

5. Elektromotoranordnung nach Anspruch 1, **dadurch gekennzeichnet, dass** das Ritzel (5) und das zweite Lager (14) axial benachbart angeordnet sind.

6. Elektromotoranordnung nach einem der vorhergehenden Ansprüche, **dadurch gekennzeichnet, dass** das erste Gehäuseteil (2) einen Gehäusedeckel (2a) aufweist.

7. Kraftfahrzeuggetriebe umfassend eine Elektromotoranordnung (1) nach einem der vorhergehenden Ansprüche, wobei das zweite Gehäuseteil (3) einem Getriebegehäuse des Kraftfahrzeuggetriebes zugeordnet ist, wobei das Kraftfahrzeuggetriebe zumindest ein außenverzahntes Bauteil aufweist, **dadurch gekennzeichnet, dass** das Losrad (7) mit dem außenverzahnten Bauteil in Zahneingriff steht.

8. Verfahren zur Montage einer Elektromotoranordnung (1) nach einem der vorhergehenden Ansprüche, mit den Schritten:
- Einführen des Elektromotors (4), der Rotorwelle (5), des Ritzels (6) und des ersten Lagers (13) in das erste Gehäuseteil (2), wobei das zweite Lager (14) auf die Rotorwelle (5) aufgeschoben oder in eine zusätzliche Ausnehmung des zweiten Gehäuseteils angeordnet wird;
- Anordnen des Losrads (7) an das Ritzel (6), sodass das Losrad (7) in Zahneingriff mit dem Ritzel (6) steht;
- Ausrichten des Losrads (7), derart, dass das Losrad (7) koaxial zur Ausnehmung (11) des ersten Getriebeteils ausgerichtet ist;
- Anbringen der Zentriervorrichtung (8) an das erste Gehäuseteil (2), wobei die Zentriervorrichtung (8) durch das Losrad (8) hindurch und axial in Richtung der Ausnehmung (11) des ersten Gehäuseteils geschoben oder gepresst wird, wobei hierbei das erste Gehäuseteil (2), die Zentriervorrichtung (8), der Elektromotor (4), die Rotorwelle (5), das Ritzel (6), das erste Lager (13) und das Losrad (7) eine Baugruppe bilden;
- Zentrieren der Baugruppe, indem die Zentriervorrichtung (8) in die Ausnehmung (12) des zweiten Gehäuseteils (3) geschoben oder gepresst wird;
- Verbinden des ersten Gehäuseteils (2) mit dem zweiten Gehäuseteil (3).

9. Verfahren zur Montage einer Elektromotoranordnung (1) nach einem der Ansprüche 1 bis 7, mit den Schritten:
- Einführen des Elektromotors (4), der Rotorwelle (5), des Ritzels (6) und des ersten Lagers (13) in das erste Gehäuseteil (2), wobei das zweite Lager (14) auf die Rotorwelle (5) aufgeschoben oder in eine zusätzliche Ausnehmung des zweiten Gehäuseteils angeordnet wird;
- Anordnen des Losrads (7) an das Ritzel (6), sodass das Losrad (7) in Zahneingriff mit dem Ritzel (6) steht;
- Ausrichten des Losrads (7), derart, dass das Losrad (7) koaxial zur Ausnehmung (11) des ersten Getriebeteils ausgerichtet ist, wobei hierbei das erste Gehäuseteil (2), der Elektromotor (4), die Rotorwelle (5), das Ritzel (6), das erste Lager (13) und das Losrad (7) eine Baugruppe bilden;
- Anbringen der Zentriervorrichtung (8) an das zweite Gehäuseteil (3), wobei die Zentriervorrichtung (8) axial in Richtung der Ausnehmung (12) des zweiten Gehäuseteils (3) geschoben oder gepresst wird;
- Zentrieren der Baugruppe, indem das Losrad (7) auf die Zentriervorrichtung (8) geschoben und in Richtung der Ausnehmung (12) des zweiten Gehäuseteils geschoben wird, wobei hierdurch die Ausnehmung (11) des ersten Gehäuseteils auf die Zentriervorrichtung (8) geschoben oder gepresst wird;
- Verbinden des ersten Gehäuseteils (2) mit dem zweiten Gehäuseteil (3).

## Claims

1. Electric motor assembly (1) comprising two housing parts, wherein the first housing part (2) can be connected to the second housing part (3), wherein an electric motor (4) is arranged in the first housing part (2), wherein a rotor shaft (5) of the electric motor (4) has a pinion (6) which meshes with an idler gear (7) so as to form a spur-gear stage, **characterized in that** a centring device (8) centres the first housing part (2) with respect to the second housing part (3), wherein the idler gear (7) is mounted rotatably on the centring device (8), and the centring device (8) is of cylindrical form and forms a longitudinal axis, wherein the longitudinal axis of the centring device (8) is oriented parallel to the rotor shaft (5), and the centring device (8) axially extends into in each case one cutout (11, 12) of the first and second housing parts, and the rotor shaft (5) is mounted rotatably in the first housing part (2) by means of a first bearing (13) and in the first housing part (2) or in the second housing part (3) by means of a second bearing (14).

2. Electric motor assembly according to Claim 1, **characterized in that** the centring device (8) is in the form of a bolt (9), pin or sleeve (10).

3. Electric motor assembly according to either of Claims 1 and 2, **characterized in that** the centring device (8) is connected to the first or second housing part (2, 3) by means of a clearance fit.

4. Electric motor assembly according to either of Claims 1 and 2, **characterized in that** the centring device (8) is connected to the first and/or second housing part (2, 3) by means of a press fit.

5. Electric motor assembly according to Claim 1, **characterized in that** the pinion (5) and the second bearing (14) are arranged in an axially adjacent manner.

6. Electric motor assembly according to one of the preceding claims, **characterized in that** the first housing part (2) has a housing cover (2a).

7. Motor vehicle transmission comprising an electric motor assembly (1) according to one of the preceding claims, wherein the second housing part (3) is associated with a transmission housing of the motor vehicle transmission, wherein the motor vehicle transmission has at least one externally toothed component, **characterized in that** the idler gear (7) meshes with the externally toothed component.

8. Method for assembling an electric motor assembly (1) according to one of the preceding claims, comprising the steps of:
- inserting the electric motor (4), the rotor shaft (5), the pinion (6) and the first bearing (13) into the first housing part (2), wherein the second bearing (14) is pushed onto the rotor shaft (5) or is arranged in an additional cutout of the second housing part;
- arranging the idler gear (7) against the pinion (6) such that the idler gear (7) meshes with the pinion (6);
- orienting the idler gear (7) in such a way that the idler gear (7) is oriented so as to be coaxial with the cutout (11) of the first housing part;
- attaching the centring device (8) to the first housing part (2), wherein the centring device (8) is pushed or pressed through the idler gear (8) and axially in the direction of the cutout (11) of the first housing part, wherein here the first housing part (2), the centring device (8), the electric motor (4), the rotor shaft (5), the pinion (6), the first bearing (13) and the idler gear (7) form a unit;
- centring the unit by pushing or pressing the centring device (8) into the cutout (12) of the second housing part (3);
- connecting the first housing part (2) to the second housing part (3).

9. Method for assembling an electric motor assembly (1) according to one of Claims 1 to 7, comprising the steps of:
- inserting the electric motor (4), the rotor shaft (5), the pinion (6) and the first bearing (13) into the first housing part (2), wherein the second bearing (14) is pushed onto the rotor shaft (5) or is arranged in an additional cutout of the second housing part;
- arranging the idler gear (7) against the pinion (6) such that the idler gear (7) meshes with the pinion (6);
- orienting the idler gear (7) in such a way that the idler gear (7) is oriented so as to be coaxial with the cutout (11) of the first housing part, wherein here the first housing part (2), the electric motor (4), the rotor shaft (5), the pinion (6), the first bearing (13) and the idler gear (7) form a unit;
- attaching the centring device (8) to the second housing part (3), wherein the centring device (8) is pushed or pressed axially in the direction of the cutout (12) of the second housing part (3);
- centring the unit by pushing the idler gear (7) onto the centring device (8) and in the direction of the cutout (12) of the second housing part, wherein the cutout (11) of the first housing part is consequently pushed or pressed onto the centring device (8);
- connecting the first housing part (2) to the second housing part (3).

## Revendications

1. Ensemble moteur électrique (1) comportant deux parties de boîtier, la première partie de boîtier (2) pouvant être reliée à la deuxième partie de boîtier (3), un moteur électrique (4) étant disposé dans la première partie de boîtier (2), un arbre de rotor (5) du moteur électrique (4) comprenant un pignon (6), lequel est en engrènement avec un pignon fou (7), afin de réaliser un étage à pignons droits, **caractérisé en ce qu'**un dispositif de centrage (8) centre la première partie de boîtier (2) par rapport à la deuxième partie de boîtier (3), le pignon fou (7) étant monté à rotation sur le dispositif de centrage (8) et le dispositif de centrage (8) étant configuré de manière cylindrique et formant un axe longitudinal, l'axe longitudinal du dispositif de centrage (8) étant orienté parallèlement à l'arbre de rotor (5) et le dispositif de centrage (8) s'étendant axialement dans respectivement un évidement (11, 12) de la première et de la deuxième partie de boîtier et l'arbre de rotor (5) étant monté à rotation au moyen d'un premier palier (13) dans la première partie de boîtier (2) et au moyen d'un deuxième palier (14) dans la première partie de boîtier (2) ou dans la deuxième partie de boîtier (3).

2. Ensemble moteur électrique selon la revendication 1, **caractérisé en ce que** le dispositif de centrage (8) est réalisé sous forme de boulon (9), de goupille ou de douille (10).

3. Ensemble moteur électrique selon l'une des revendications 1 et 2, **caractérisé en ce que** le dispositif de centrage (8) est connecté à la première ou à la deuxième partie de boîtier (2, 3) au moyen d'un ajustement avec jeu.

4. Ensemble moteur électrique selon l'une des revendications 1 et 2, **caractérisé en ce que** le dispositif de centrage (8) est connecté à la première et/ou à la deuxième partie de boîtier (2, 3) au moyen d'un ajustement serré.

5. Ensemble moteur électrique selon la revendication 1, **caractérisé en ce que** le pignon (5) et le deuxième palier (14) sont disposés de manière axialement adjacente.

6. Ensemble moteur électrique selon l'une des revendications précédentes, **caractérisé en ce que** la première partie de boîtier (2) comprend un couvercle de boîtier (2a).

7. Transmission de véhicule automobile comportant un ensemble moteur électrique (1) selon l'une des revendications précédentes, la deuxième partie de boîtier (3) étant associée à un boîtier de transmission de la transmission de véhicule automobile, la transmission de véhicule automobile comprenant au moins un composant à denture extérieure, **caractérisée en ce que** le pignon fou (7) est en engrènement avec le composant à denture extérieure.

8. Procédé de montage d'un ensemble moteur électrique (1) selon l'une des revendications précédentes, comportant les étapes suivantes :
- introduction du moteur électrique (4), de l'arbre de rotor (5), du pignon (6) et du premier palier (13) dans la première partie de boîtier (2), le deuxième palier (14) étant poussé sur l'arbre de rotor (5) ou étant disposé dans un évidement supplémentaire de la deuxième partie de boîtier ;
- disposition du pignon fou (7) au niveau du pignon (6), de sorte que le pignon fou (7) soit en engrènement avec le pignon (6) ;
- orientation du pignon fou (7), de telle sorte que le pignon fou (7) soit orienté coaxialement par rapport à l'évidement (11) de la première partie de boîtier ;
- installation du dispositif de centrage (8) sur la première partie de boîtier (2), le dispositif de centrage (8) étant poussé ou pressé à travers le pignon fou (8) et axialement dans la direction de l'évidement (11) de la première partie de boîtier, la première partie de boîtier (2), le dispositif de centrage (8), le moteur électrique (4), l'arbre de rotor (5), le pignon (6), le premier palier (13) et le pignon fou (7) formant en l'occurrence un module ;
- centrage du module, par le fait que le dispositif de centrage (8) est poussé ou pressé dans l'évidement (12) de la deuxième partie de boîtier (3) ;
- liaison de la première partie de boîtier (2) à la deuxième partie de boîtier (3).

9. Procédé de montage d'un ensemble moteur électrique (1) selon l'une des revendications 1 à 7, comportant les étapes suivantes :
- introduction du moteur électrique (4), de l'arbre de rotor (5), du pignon (6) et du premier palier (13) dans la première partie de boîtier (2), le deuxième palier (14) étant poussé sur l'arbre de rotor (5) ou étant disposé dans un évidement supplémentaire de la deuxième partie de boîtier ;
- disposition du pignon fou (7) sur le pignon (6), de sorte que le pignon fou (7) soit en engrènement avec le pignon (6) ;
- orientation du pignon fou (7), de telle sorte que le pignon fou (7) soit orienté coaxialement par rapport à l'évidement (11) de la première partie de boîtier, la première partie de boîtier (2), le moteur électrique (4), l'arbre de rotor (5), le pignon (6), le premier palier (13) et le pignon fou (7) formant en l'occurrence un module ;
- installation du dispositif de centrage (8) sur la deuxième partie de boîtier (3), le dispositif de centrage (8) étant poussé ou pressé axialement dans la direction de l'évidement (12) de la deuxième partie de boîtier (3) ;
- centrage du module, par le fait que le pignon fou (7) est poussé sur le dispositif de centrage (8) et poussé dans la direction de l'évidement (12) de la deuxième partie de boîtier, l'évidement (11) de la première partie de boîtier étant en l'occurrence poussé ou pressé sur le dispositif de centrage (8) ;
- liaison de la première partie de boîtier (2) à la deuxième partie de boîtier (3).
